# EUROPEAN PATENT APPLICATION

(11) **EP 4 024 386 A1**
(43) Date of publication of application: **06.07.2022**
(21) Application number: 20857691.8
(22) Date of filing: 19.08.2020
(51) Int. Cl.: G09G 5/00, G06K 19/07, G06K 19/077, G09F 9/00, G02F 1/167

(54) **INFORMATION DISPLAY DEVICE, CONTROL METHOD FOR INFORMATION DISPLAY DEVICE, DISPLAY CONTROL DEVICE, AND ELECTRONIC PAPER DISPLAY DEVICE**

(30) Priority: 29.08.2019 JP 2019156972
(71) Applicant: TOPPAN INC., Tokyo 110-0016 (JP)
(72) Inventor: MOROSAWA Katsuhiko, Tokyo 110-0016 (JP)
(74) Representative: Plasseraud IP
(86) International application number: PCT/JP2020/031229
(87) International publication number: WO 2021/039524

(57) **Abstract**

An information display device includes a communication unit, a communication control unit, a display control unit, and a display that displays information. The communication unit contactlessly communicates with an information communication medium. The communication control unit includes a transceiver and a power converter, the transceiver being configured to receive display information from the information communication medium through the communication unit, the power converter being configured to convert electromagnetic waves received by the communication unit into electric power. The display control unit includes a storage, a voltage monitor, and a display driver, the storage being configured to store the display information received by the transceiver, the voltage monitor being configured to monitor a voltage of electric power supplied from the power converter. The display driver is configured to update, based on the display information stored in the storage, the information displayed on the display.

## Description

### [Technical Field]

The present invention relates to information display devices, methods for controlling information display devices, display control devices, and electronic paper display devices.

This application claims priority to Japanese Patent Application No. 2019-156972, filed August 29, 2019, the entire contents of which are incorporated herein by reference.

### [Background Art]

With the shift to paperless information display media, the replacement of paper media by displays such as electronic paper is progressing. Information display devices with a display may have communications capability (e.g., through wireless means) and display the received information on the display.

PTL 1 discloses an information display medium having an antenna capable of contactless communication. The information display medium disclosed in PTL 1 does not have an internal power supply (e.g., a battery) and receives electric power through the antenna. The information display medium disclosed in PTL 1 receives display information and electric power from an information communication medium, such as a reader/writer. Such an information display medium can be used for small devices and hand-held devices such as distribution labels and work instructions.

### [Citation List]

### [Patent Literature]

[PTL 1] JP 6224312 B

### [Summary of the Invention]

### [Technical Problem]

Unfortunately, since the information display medium disclosed in PTL 1 depends on an external supply of electric power, a power supply voltage for driving the information display medium is prone to instability. The power supply voltage may become unstable when the information display medium is updating information displayed on the display, based on the display information transmitted. In this case, the transmitted display information fails to be correctly displayed on the display. In addition, the information display medium disclosed in PTL 1 does not have a function to determine whether the display information transmitted to the display is correctly displayed. If the transmitted display information is incorrectly displayed, the information display medium cannot automatically update the display information.

The present invention has been made in view of the above circumstances. The present invention aims to enable an information display device that receives display information and electric power from an information communication medium to determine whether the display information is correctly displayed.

### [Solution to Problem]

In order to solve the above problems, the present invention proposes the following means.

An information display device according to a first aspect of the present invention includes a communication unit, a communication control unit, a display control unit, and a display that displays information. The communication unit is configured to contactlessly communicate with an information communication medium. The communication control unit includes a transceiver and a power converter, the transceiver being configured to receive display information from the information communication medium through the communication unit, the power converter being configured to convert an electromagnetic wave received by the communication unit into electric power. The display control unit includes a storage, a voltage monitor, and a display driver, the storage being configured to store the display information received by the transceiver, the voltage monitor being configured to monitor a voltage of electric power supplied from the power converter. The display driver is configured to update, based on the display information stored in the storage, the information displayed on the display.

A method for controlling an information display device according to a second aspect of the present invention is a method for controlling an information display device that contactlessly receives display information and electric power, the method including a power supply step of supplying the electric power to the information display device; a voltage monitoring step of monitoring a voltage of the supplied electric power to determine whether the monitored voltage is less than a predetermined value; and a display updating step of updating information displayed on the information display device, based on the display information received by the information display device.

A display control unit according to a third aspect of the present invention is a display control unit for controlling information displayed on an electronic paper display, the display control unit including a storage configured to store display information; a voltage monitor configured to monitor a voltage of electric power externally supplied to the display control unit; and a display driver configured to update, based on the display information stored in the storage, the information displayed on the electronic paper display, the voltage monitor being configured to determine whether the monitored voltage is less than a predetermined value.

An electronic paper display device according to a fourth aspect of the present invention includes the above display control unit and the electronic paper display.

### [Advantageous Effects of Invention]

According to the information display device, method for controlling an information display device, display control device, and electronic paper display according to the above aspects, an information display device that receives display information and electronic power from an information communication medium, such as a reader/writer, is capable of determining whether the display information is correctly displayed.

### [Brief Description of the Drawings]

Fig. 1 illustrates the overall configuration of an information display device according to an embodiment.
Fig. 2 illustrates the configuration and functions of a communication control unit of the information display device.
Fig. 3 illustrates the configuration and functions of a display control unit of the information display device.
Fig. 4 is a flowchart for operations of the information display device.

### [Description of Embodiments]

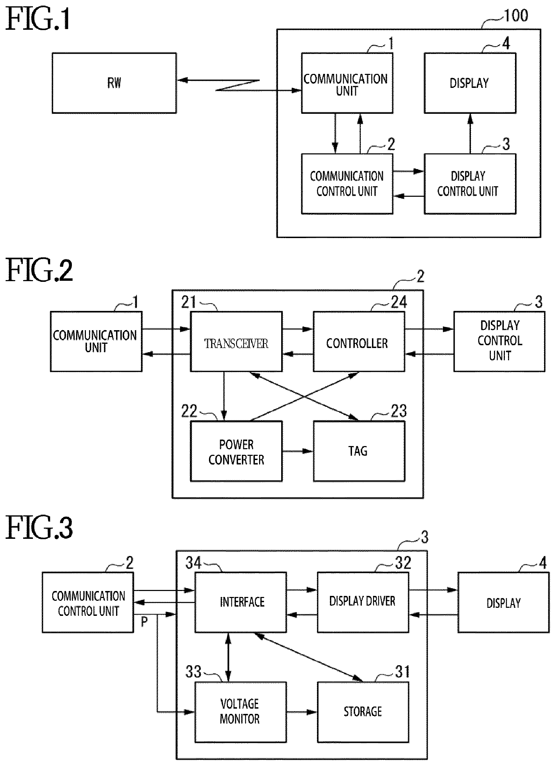

With reference to Figs. 1 to 4, an embodiment of the present invention will be described.

Fig. 1 illustrates the overall configuration of an information display device 100 according to the present embodiment.

The information display device 100 includes a communication unit 1, a communication control unit 2, a display control unit 3, and a display 4. The information display device 100 has a radio frequency (RF) communications capability of contactlessly receiving display information and electric power from an information communication medium RW (e.g., a reader/writer). The information display device 100 does not have an internal power supply (e.g., a battery) and is driven using only electric power obtained by the communication unit 1 by RF communication.

The communication unit 1 is a coil antenna for the RF communications capability. The communication unit 1 transmits and receives electromagnetic waves (e.g., a high frequency (HF) band of 3 to 30 MHz, an ultra high frequency (UHF) band of 300 MHz to 3 GHz) to and from the information communication medium RW.

Fig. 2 illustrates the configuration and functions of the communication control unit 2.

The communication control unit 2 functions as an RF tag (RFID tag, IC tag, wireless tag) in combination with the communication unit 1. The communication control unit 2 receives data such as display information, commands, and electric power for operating the communication control unit 2 and the like, from the information communication medium RW through the communication unit 1. In addition, the communication control unit 2 transmits data such as tag information stored in the communication control unit 2 to the information communication medium RW through the communication unit 1. The communication control unit 2 includes a transceiver 21, a power converter 22, a tag 23, and a controller 24.

The transceiver 21 is electrically connected to the communication unit 1 and transmits and receives data and the like to and from the information communication medium RW through the communication unit 1. The transceiver 21 transmits received data and commands to the controller 24. The transceiver 21 also transmits data and the like to the information communication medium RW based on a transmission request from the controller 24.

The power converter 22 includes an RF-DC conversion circuit and obtains operating power for the communication control unit 2 from electromagnetic waves received by the communication unit 1. The electric power obtained by the power converter 22 is also supplied to the display control unit 3 for use as operating power.

The tag 23 is a memory that stores items of tag information. The items of tag information are classified into two types: ID tag information and rewritable tag information. The ID tag information refers to information that was written to the memory during manufacture and cannot be rewritten. The rewritable tag information refers to information that can be rewritten by the user.

The controller 24 controls the communication control unit 2 based on commands and data received by the transceiver 21. The controller 24 communicates with the display control unit 3 by serial communication or the like, based on commands and data received by the transceiver 21. The controller 24 is a programmable computer including a processor and a memory (not illustrated). The functions of the controller 24 are implemented by executing a program. The program running on the controller 24 is stored in a non-volatile memory of the controller 24.

Fig. 3 illustrates the configuration and functions of the display control unit 3.

The display control unit (display controller) 3 stores display information to be displayed by the display 4. The display control unit 3 drives the display 4 to display the display information. The display control unit 3 includes a storage 31, a display driver 32, a voltage monitor 33, and an interface 34.

The storage 31 is a frame memory that stores display data to be displayed by the display 4. The display information transmitted from the communication control unit 2 is stored in the storage 31 as display data.

The display driver 32 transmits the display data stored in the memory 31 to the display 4, based on a timing prescribed by the display 4. The display driver 32 supplies electric power from the communication control unit 2 to the display 4 after converting a voltage of the power as appropriate.

The voltage monitor 33 monitors a voltage V of power P supplied from the communication control unit 2 to the display control unit 3. Specifically, the voltage monitor 33 monitors a voltage V of power P supplied from the power converter 22 of the communication control unit 2 to determine whether the monitored voltage V is less than a voltage threshold T.

The interface 34 communicates with the controller 24 of the communication control unit 2 by serial communication or the like. The interface 34 includes a plurality of registers that store status flags including a voltage control flag F and a busy flag B, and operating parameters including the voltage threshold T.

The controller 24 of the communication control unit 2 transmits write commands and data to the interface 34 to thereby update operating parameters and/or status flags stored in registers of the interface 34. In addition, the controller 24 of the communication control unit 2 transmits read commands to the interface 34 to thereby read operating parameters and/or status flags stored in registers of the interface 34.

The voltage control flag F is a binary status flag having an initial value of 1 after reset. The voltage control flag F is set to 1 in response to the voltage monitor 33 determining that the voltage V is less than the voltage threshold T. Even when the voltage V is determined to be greater than the voltage threshold T thereafter, the voltage control flag F is maintained at 1.

The voltage control flag F is stored in a register of the interface 34 and can be changed by a write command and data transmitted from the information communication medium RW. For example, the voltage control flag F set to 1 can be changed to 0 in response to a write command from the user.

The busy flag B is a binary status flag having an initial value of 0 after reset. The busy flag B has a value of 1 during operation of the display control unit 3. The busy flag B is set to 1 upon, for example, transfer of display data to the display 4 by the display driver 32 and set to 0 upon termination of the transfer.

The voltage threshold T is stored in a register of the interface 34 and can be changed by a write command and data transmitted from the information communication medium RW. The user uses the information communication medium RW to transmit a command and data (a specific value as the voltage threshold T) for rewriting the voltage threshold T. The communication control unit 2 having received the command and data communicates with the interface 34 of the display control unit 3 to rewrite the voltage threshold T used by the voltage monitor 33.

The voltage threshold T may be a predetermined fixed value of, for example, 2.5 V or 3.5 V.

The display 4 may be, for example, an electronic paper display of electrophoretic type or the like. The display 4 does not require electricity for retaining an image and consumes only a small amount of power to rewrite the image. The display mode of the display 4 is a segment type or dot-matrix type. The display driver 32 applies a predetermined voltage to each pixel of the display 4 to cause pigments of selected color(s) to migrate to the display surface side. Other than an electronic paper display of electrophoretic type or the like, the display 4 may be an electronic paper display such as a quick-response liquid-powder display or an electrowetting display. The display control unit (display controller) 3 and the display 4 constitute an electronic paper display device.

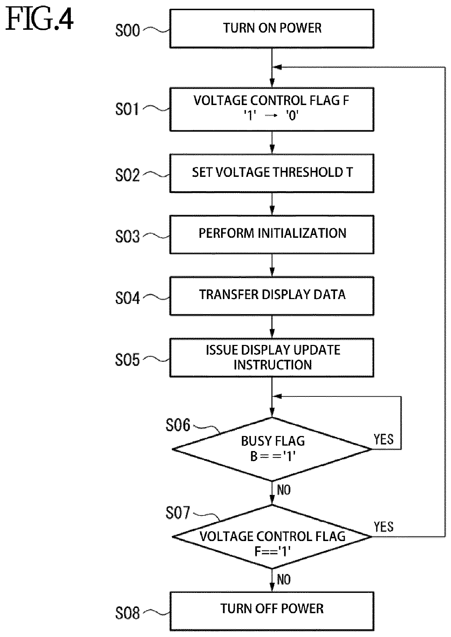

Operations of the information display device 100 will be described with reference to a flowchart. Fig. 4 is a flowchart for operations of the information display device 100. The controller 24 transmits and receives commands and data to and from the interface 34 based on instructions from the information communication medium RW received by the transceiver 21, to thereby perform steps S01 to S08 below.

The power converter 22 supplies power P to the display control unit 3 (power supply step). The display control unit 3 is activated in response to receiving the power P. At step S01, the controller 24 initializes a voltage control flag F of the interface 34. Thus, the voltage control flag F having an initial value of 1 after reset is changed to 0. The controller 24 then performs step S02.

At step S02, the controller 24 initializes a voltage threshold T of the interface 34. The voltage threshold T is initialized to a minimum operating voltage (e.g., 2.3 V) of the display control unit 3. The controller 24 then performs step S03.

At step S03, the controller 24 initializes operating parameters and/or status flags other than the voltage control flag F and the voltage threshold T. The steps S01 to S03 may be performed in any order. The controller 24 then performs step S04.

After initialization of the operating parameters and/or status flags is completed, the voltage monitor 33 monitors a voltage V of the power P supplied from the power converter 22 of the communication control unit 2 to determine whether the voltage V is less than a predetermined value (voltage threshold T) (voltage monitoring step).

At step S04, the controller 24 transfers, to the interface 34, display information transmitted from the information communication medium RW and received by the communication unit 1. The display information transferred to the interface 34 is stored in the storage 31 as display data. When transfer of the display information to the interface 34 is completed, the controller 24 performs step S05.

At step S05, the controller 24 transmits display data stored in the storage 31 to the display 4 and issues an instruction to update information displayed on the display 4 (hereinafter "display update instruction"). The display update instruction is transmitted from the interface 34 to the display driver 32 to cause the display driver 32 to start transmitting the display data to the display 4 (display updating step). The busy flag B is set to 1 when the display driver 32 is transferring the display data to the display 4. The controller 24 then performs step S06.

At step S06, the controller 24 reads the busy flag B and waits until the value of the busy flag B is changed from 1 to 0. Specifically, the controller 24 determines whether the value of the busy flag B is equal to 1 at predetermined time intervals. When the value of the busy flag B is determined to be equal to 1 (step S06: YES), the step S06 is performed again. Upon determination that the value of the busy flag B is 0 (step S06: NO), the controller 24 performs step S07.

At step S07, the controller 24 reads the voltage control flag F. When the read voltage control flag F has a value of 1, the event A or event B below is presumed to have occurred.

(Event A) From when the controller 24 issues the display update instruction until the display driver 32 completes transmitting the display data to the display 4, the voltage monitor 33 determines that the voltage V is less than the voltage threshold T, resulting in the voltage control flag F being changed to 1.

(Event B) From when the controller 24 issues the display update instruction until the display driver 32 completes transmitting the display data to the display 4, the voltage V is decreased to bring the display control unit 3 into a reset state, resulting in the voltage control flag F being set to an initial value of 1 after reset.

If the event A or event B occurs, it is presumed that the update of information displayed on the display 4 based on the display update instruction has not been correctly completed. Therefore, the controller 24 retries the steps S01 to S06 (retry step). Specifically, the controller 24 determines whether the value of the voltage control flag F is equal to 1, and upon determination that the value of the voltage control flag F is equal to 1 (step S07: YES), causes the process to return to step S01.

If the controller 24 determines at step S07 that the read voltage control flag F has a value of 0 (step S07: NO), it is presumed that the update of information displayed on the display 4 based on the display update instruction has been correctly completed. The controller 24 then performs the step S08.

At step S08, the controller 24 stops the supply of power P to the display control unit 3. Since the display 4 may be, for example, an electronic paper display of electrophoretic type or the like, the updated information is retained on the display 4 after the supply of power is stopped.

As described above, the information display device 100 of the present embodiment includes the communication unit 1, the communication control unit 2, the display control unit 3, and the display 4. The communication unit 1 is configured to contactlessly communicate with the information communication medium RW. The communication control unit 2 includes the transceiver 21 and the power converter 22. The transceiver 21 receives display information from the information communication medium RW through the communication unit 1. The power converter 22 converts electromagnetic waves received by the communication unit 1 into power P. The display control unit (display controller) 3 includes the storage 31, the voltage monitor 33, and the display driver 32. The storage 31 stores the display information received by the transceiver 21. The voltage monitor 33 monitors a voltage V of the power P supplied from the power converter 22. The display 4 is configured to display information. The display driver 32 is configured to update, based on the display information stored in the storage 31, the information displayed on the display 4. According to the present embodiment, the information display device 100, which receives display information and electric power from the information communication medium RW, determines whether the information displayed on the display 4 is correctly updated based on the received display information. The information display device 100, which operates without a battery, easily determines whether the information displayed on the display 4 is correctly updated based on the received display information, without requiring a special power-supply monitoring mechanism, which would otherwise increase the required operating power.

The information display device 100 according to the present embodiment retries updating the information displayed on the display 4 if it is presumed that the information displayed on the display 4 is not correctly updated based on the transmitted display information (step S07: YES). The information display device 100 reliably updates the information displayed on the display 4 based on the transmitted display information without the need for visually confirming the update of the information displayed on the display.

The display control unit (display controller 3) according to the present embodiment includes the storage 31, the voltage monitor 33, and the display driver 32. The storage 31 stores display information. The voltage monitor 33 monitors a voltage V of power P supplied from outside (information communication medium RW). The display driver 32 updates information displayed on an electronic paper display (display 4), based on the display information stored in the storage 31. The display control unit of the present embodiment is configured to determine whether the monitored voltage V is less than a predetermined value.

One embodiment of the present invention has been described in detail with reference to the drawings. However, the specific configurations are not limited to this embodiment but include design changes within the scope not departing from the spirit of the present invention. Further, the configurations described in the above embodiment and modifications described below can be appropriately combined with each other.

### (Modification 1)

For example, in the above embodiment, the controller 24 retries the steps S01 to S06 when the read voltage control flag F has a value of 1 (step S07: YES); however, the method of controlling the display information device is not limited to this. The display information device may skip the steps S01 to S04 and retry only the steps S05 and S06 when it is determined that the transferred display information is stored in the storage 31 as display data. Alternatively, when the read voltage control flag F has a value of 1, the display information device may merely present error information instead of performing the retry step.

### (Modification 2)

For example, in the above embodiment, the communication control unit 2 and the display control unit 3 are separate from each other; however, the configuration of the information display device is not limited to this. In the information display device, the communication control unit 2 and the display control unit 3 may be integrated.

### [Industrial Applicability]

The configurations described in the present embodiment are applicable to devices which receive information and electric power from an information communication medium.

### [Reference Signs List]

- 100: Information display device
- 1: Communication unit
- 2: Communication control unit
- 21: Transceiver
- 22: Power converter
- 23: Tag
- 24: Controller
- 3: Display control unit (display controller)
- 31: Storage
- 32: Display driver
- 33: Voltage monitor
- 34: Interface
- 4: Display

## Claims

1. An information display device comprising:
a communication unit configured to contactlessly communicate with an information communication medium;
a communication control unit including a transceiver and a power converter,
the transceiver being configured to receive display information from the information communication medium through the communication unit,
the power converter being configured to convert an electromagnetic wave received by the communication unit into electric power;
a display control unit including a storage, a voltage monitor, and a display driver,
the storage being configured to store the display information received by the transceiver,
the voltage monitor being configured to monitor a voltage of electric power supplied from the power converter; and
a display on which information is displayed,
the display driver being configured to update, based on the display information stored in the storage, the information displayed on the display.

2. The information display device according to claim 1, wherein the display, the display control unit, and the communication control unit are driven using only the electric power supplied from the power converter.

3. The information display device according to claim 1 or 2, wherein the voltage monitor is configured to determine whether the monitored voltage is less than a predetermined value.

4. The information display device according to claim 3, wherein
the display control unit is configured to store a voltage control flag indicating determination by the voltage monitor that the monitored voltage is less than the predetermined value, and
the display control unit is configured to retain the voltage control flag even if the monitored voltage, which has been less than the predetermined value, becomes greater than or equal to the predetermined value.

5. The information display device according to claim 3 or 4, wherein the predetermined value is variably settable.

6. The information display device according to any one of claims 3 to 5, wherein the display driver is configured to retry updating of the information displayed on the display in response to determination by the voltage monitor that the monitored voltage is less than the predetermined value before the display driver completes updating of the information displayed on the display.

7. The information display device according to any one of claims 1 to 6, wherein the display is an electronic paper display.

8. The information display device according to any one of claims 1 to 7, wherein the communication unit comprises a coil antenna.

9. A method for controlling an information display device that contactlessly receives display information and electric power, comprising:
a power supply step of supplying the electric power to the information display device;
a voltage monitoring step of monitoring a voltage of the supplied electric power to determine whether the monitored voltage is less than a predetermined value; and
a display updating step of updating information displayed on the information display device, based on the display information received by the information display device.

10. The method for controlling an information display device according to claim 9, further comprising a retry step of retrying the display updating step in response to determination that the monitored voltage is less than the predetermined value.

11. A display control unit for controlling information displayed on an electronic paper display, comprising:
a storage configured to store display information;
a voltage monitor configured to monitor a voltage of electric power externally supplied to the display control unit; and
a display driver configured to update, based on the display information stored in the storage, the information displayed on the electronic paper display,
the voltage monitor being configured to determine whether the monitored voltage is less than a predetermined value.

12. The display control unit according to claim 11, wherein the display control unit is configured to:
store a voltage control flag indicating determination by the voltage monitor that the monitored voltage is less than the predetermined value; and
retain the voltage control flag even if the monitored voltage, which has been less than the predetermined value, becomes greater than or equal to the predetermined value.

13. An electronic paper display device comprising:
the display control unit according to claim 11 or 12; and
the electronic paper display according to claim 11 or 12.
